# EUROPÄISCHE PATENTSCHRIFT

(11) **EP 2 679 897 B1**
(45) Veröffentlichungstag und Bekanntmachung des Hinweises auf die Patenterteilung: **12.08.2015**
(21) Anmeldenummer: 13172254.8
(22) Anmeldetag: 17.06.2013
(51) Int. Cl.: F23D 11/00, F23D 11/44, F23C 7/00, F23D 11/40, F23L 15/04

(54) **Ölvormischbrenner mit Drallerzeugungsvorrichtung**
Oil pre-mix burner with swirler
Brûleur à prémélange d'huile avec tourbillonneur

(30) Priorität: 26.06.2012 DE 102012012539
(43) Veröffentlichungstag der Anmeldung: 01.01.2014
(73) Patentinhaber: Robert Bosch GmbH, 70442 Stuttgart (DE)
(72) Erfinder: Rausch, Rainer, 36304 Alsfeld (DE); Geschwend, Thomas, 35578 Wetzlar (DE); Medeiros, Antonio, 35423 Lich (DE); Cecen, Sadik, 35102 Lohra (DE); Ripplinger, Hans-Joachim, 35460 Staufenberg (DE); Lang, Raphael, 35305 Gruenberg (DE); Schroeder, Thorsten, 35305 Gruenberg (DE); Hetche, Juergen, 35102 Lohra (DE)

(56) Entgegenhaltungen:
- EP-A1- 1 291 079
- DE-A1- 10 218 623
- DE-A1-102010 046 733
- US-A- 4 389 185

## Beschreibung

Die Erfindung betrifft einen Ölvormischbrenner nach dem Oberbegriff des Patentanspruches 1.

Derartige Ölvormischbrenner besitzen ein zylindrisches Brennelement mit einer Brenneroberfläche auf der äußeren Mantelfläche. Um eine zentrale Öleinspritzvorrichtung befindet sich in der Regel eine Verteilkammer für den entstehenden Ölnebel, damit dieser gleichmäßig von innen her die Brenneroberfläche erreicht. In die Verteilkammer gelangt Verbrennungsluft über mindestens eine Einströmöffnung im Bereich der Öleinspritzvorrichtung, wobei es sich um ein Einspritzventil oder eine Öldüse, welche an einem Düsenstock mit Ölvorwärmer befestigt ist, handeln kann. Stromaufwärts der Öleinspritzvorrichtung befindet sich ein Verbrennungsluftkanal mit Verbindung zu einem Gebläse.

Insbesondere bei Gasbrennern, die modulierend betrieben werden, also bei denen der Leistungsbereich zwischen einem geringen Anteil der Maximalleistung und der Maximalleistung gesteuert werden kann, haben sich die sogenannten Vormischbrenner durchgesetzt. Bei diesen Brennern wird der Brennstoff und die zu dessen Verbrennung erforderliche Verbrennungsluft von der Flamme örtlich getrennt vermischt und dann verbrannt. Dazu wird meist ein zylindrisches Brennelement als Flammenhalter eingesetzt, der für das Brennstoff-/Luft-Gemisch durchlässig ist und einen Innenraum umschließt, dem das Brennstoff-/Luft-Gemisch zugeführt wird. Mit dieser Technologie lassen sich kleine Flammen mit guten Abgaswerten, relativ kleine Flammenhalter und große Modulationsbereiche verwirklichen.

Das Grundprinzip eines Ölvormischbrenners ist die Vermischung von fein zerstäubtem Öl mit vorgewärmter Luft. Durch dieses Prinzip ist es möglich, dass sich zum Beispiel eine sogenannte kalte Flamme bildet, so dass der Brennstoff über eine Oberfläche verbrannt werden kann. Die Oberflächenverbrennung ist allerdings auch ohne kalte Flamme möglich. Generell ist das Erwärmen von Luft auf Grund der geringen Wärmekapazität relativ schwierig, weil dazu entweder ein effektiver Wärmeübergang über eine Wand auf den Luftstrom und/oder hohe Wandtemperaturen notwendig sind.

Ein Ölvormischbrenner ist zum Beispiel aus der DE 10 2006 000 174 A1 bekannt. Dabei wird die Tatsache genutzt, dass heiße Luft das Öl verdampft und somit ein Gasgemisch gebildet werden kann, welches wie bei einem Gas-Vormischbrenner durch den Flammhalter hindurch tritt und abbrennt. Durch die Zumischung von Abgas zur Verbrennungsluft zur Luftvorwärmung wird zudem die Bildung von Stickoxiden verringert und dadurch soll sich auch das Anlaufverhalten verbessern, weil der Betriebspunkt relativ schnell erreicht wird. Die Verbrennungsluft wird zur Wärmeaufnahme durch eine mindestens abschnittsweise über eine Brenneroberfläche ragende, von der Brennerflamme beabstandete Leiteinrichtung geführt und in einer Düse in der Leiteinrichtung beschleunigt, damit das Abgas aus dem Brennraum angesaugt und mit der Luft vermischt werden kann.

Auch die DE 26 43 293 A1 beschreibt einen solchen Kanal für die Verbrennungsluft, der als Zylinder um den hinteren Bereich eines Brennstabes bzw. Brennelementes angeordnet ist. Da für die Vermischung und die Verbrennungsreaktion ein bestimmter Mindestbrennelementdurchmesser erforderlich ist, kann dieser Aufbau allerdings zu einem gegenüber bekannten Bauformen insgesamt relativ großen Feuerraum führen.

Weiterhin sind aus der DE 21 07 514 A eine Vorrichtung zum Heizen mit Infrarotstrahlung und aus der US 1 082 576 A ein Ölbrenner mit flächig unterhalb der Brenneroberfläche angeordneten, abgeschlossenen, flächig durchgehenden Kanälen zur Luftvorwärmung bekannt. Aus diesen nicht unterbrochenen Kanälen wird in beiden Fällen die vorgewärmte Luft zum Zentrum mit der Brennstoffzufuhr zurück geleitet und dort mit Brennstoff vermischt. Von diesem Zentrum aus tritt das Gemisch in die Brennzone ein, ohne wieder in die Nähe des zur Vorwärmung dienenden Luft-Strömungsweges zu kommen.

Aus der DE 20 2008 005 913 U1 ist ein Ölvormischbrenner bekannt, bei dem ein Luftwärmetauscher für die Vorwärmung der Verbrennungsluft zugeordnet ist, welcher aus mindestens einem das Brennelement mit Abstand umgreifenden Kanal besteht. Dieser besteht aus nebeneinander verlaufenden, parallel angeordneten, aber in der Reihe durchströmten Kanälen, die beide von außen mit Wärme aus der Brennerflamme beaufschlagt werden.

Die DE 10 2010 046 733 A1 betrifft einen Luftwärmetauscher aus mindestens einem Doppelrohrelement mit einem in Reihe durchströmten Innenrohr und einem zu diesem konzentrischen Außenrohr. Dabei ist der Luftwärmetauscher oberhalb der Brenneroberfläche angeordnet und besteht aus mehreren symmetrisch über den Umfang verteilten, sich achsparallel zum Brennelement mindestens über einen Teil dessen Länge erstreckenden und parallel durchströmten Doppelrohrelementen. Dabei weist jedes Doppelrohrelement an der Stirnseite des freien Endes eine Umlenkzone als Verbindung zwischen Innenrohr und einem zwischen Innenrohr und Außenrohr gebildeten Ringraum auf.

Somit ist jedes Doppelrohrelement an seiner Eintrittsseite des Innenrohres mit dem Verbrennungsluftkanal verbunden. Dort tritt die Verbrennungsluft ein und gelangt jeweils nach Verlassen des Innenrohres in einer Umlenkzone an der Stirnseite des freien Endes in den zwischen Innenrohr und Außenrohr gebildeten Ringraum. In diesem strömt die bereits vorgewärmte Luft in Richtung öleinspritzvorrichtungsnaher Stirnseite zurück und nimmt weitere Wärme auf. Sie tritt dort als vorgewärmte Verbrennungsluft im Bereich um die Öleinspritzvorrichtung in die Verteilkammer ein. In einer bevorzugten Ausführungsform überragt in einem Doppelrohrelement am öleinspritzvorrichtungsnahen Ende das Innenrohr das Außenrohr in Längsrichtung, so dass es den mit der Verteilkammer in Verbindung stehenden Ausmündungsbereich des Ringspalts durchgreift und durch eine Begrenzungswand bis in den Verbrennungsluftkanal hinein reicht.

Die DE 102 18 623 A1 offenbart einen Zerstäuberbrenner für ein Heizgerät mit einer Düse zum Zerstäuben des Brennstoffs und mindestens einer Öffnung zum Zuführen von Brennluft. Dabei ist diese Öffnung mit mindestens einer Luftleiteinrichtung versehen, mittels der die zugeführte Brennluft einen Drall erhält.

Der Erfindung liegt daher die Aufgabe zugrunde, bei einem Ölvormischbrenner die Verbrennungsqualität und die Robustheit, besonders im Hinblick auf Modulationsfähigkeit, zu optimieren.

Erfindungsgemäß wurde dies mit den Merkmalen des Patentanspruches 1 gelöst. Vorteilhafte Weiterbildungen sind den Unteransprüchen zu entnehmen.

Der Ölvormischbrenner ist dadurch gekennzeichnet, dass die vorgewärmte Verbrennungsluft ausgehend von dieser Sammelkammer nach innen über eine Drallerzeugungseinrichtung in den Bereich um die Öleinspritzvorrichtung in die Verteilkammer strömt, wobei die Drallerzeugungseinrichtung als Ringscheibe ausgebildet ist, welche von zugeordneten Begrenzungswänden in axialer Richtung beidseitig eingeschlossen ist und in radialer Richtung Kanäle für die Verbrennungsluft aufweist, wobei die Drallerzeugungseinrichtung als Ringscheibe ausgebildet ist, in Umfangsrichtung eine gleichmäßige wellenförmige Gestalt aus alternierenden Kanälen aufweist, wobei die Wellenaußenseiten jeweils an zugeordneten Begrenzungswänden anliegen und zwischen den Welleninnenseiten und der jeweils gegenüberliegenden Begrenzungswand jeweils ein Kanal für die Verbrennungsluft ausgebildet wird.

Dazu kann die von außen nach innen durchströmte Drallerzeugungseinrichtung ringförmig und symmetrisch zum Zentrum der Öleinspritzvorrichtung ausgebildet sein.

Vorteilhafterweise besitzen die Kanäle für die Verbrennungsluft die Form von Flachkanälen mit jeweils einem im Wesentlichen rechteckigen Durchströmquerschnitt. Die Wellenaußenseiten sind jeweils mit mindestens einem Langloch versehen, welches in Richtung eines Kanals verläuft und unter anderem zum Anschweißen an eine Begrenzungswand sowie zum Spannungsausgleich beim Biegevorgang dient.

In einer bevorzugten Ausführungsform weisen die Kanäle der Drallerzeugungseinrichtung einen radialen Anstellwinkel auf, wobei dieser etwa im Bereich von 30 Grad bis 75 Grad zur Mittelsenkrechte beträgt.

Eine weitere vorteilhafte Ausführungsform sieht vor, dass die mit der Drallerzeugungseinrichtung erreichbare Drallrichtung auf die zentrale Öleinspritzvorrichtung, insbesondere deren Sprühverhalten, abgestimmt ist. Vorzugsweise ist dabei die Drallrichtung des mit der Drallerzeugungseinrichtung beschleunigten Luftstromes gleich der Drallrichtung des mit der zentralen Öleinspritzvorrichtung entsprechend beschleunigten Ölsprays. Diese Kombination bewirkt relativ lange Wirbel mit entsprechender Beeinflussung der Strömung bis weit in die Verteilkammer hinein. Daher ergibt sich eine intensive und möglichst homogene Durchmischung von Ölnebels mit der Verbrennungsluft

In einer bevorzugten Ausführungsform ist beabstandet um die zentrale Öleinspritzvorrichtung herum ein zugeordneter Konus angeordnet, welcher den Übergang der brennstabnahen Begrenzungswand der Drallerzeugungseinrichtung in die Verteilkammer bildet. Vorzugsweise erstreckt sich der Konus mindestens über etwa ein Fünftel der Länge der Verteilkammer und verjüngt sich in Strömungsrichtung so, dass der Eintrittsdurchmesser mindestens 5 Prozent größer als der Austrittsdurchmesser ist.

Vorteilhafterweise ist der Außendurchmesser der Drallerzeugungseinrichtung kleiner als der Teilkreisdurchmesser der Doppelrohrelemente und der Innendurchmesser der Drallerzeugungseinrichtung größer oder gleich dem Innendurchmesser des Konus um die zentrale Öleinspritzvorrichtung gestaltet.

Mit den erfindungsgemäßen Maßnahmen werden bei Ölvormischbrennern sowohl die Verbrennungsqualität als auch die Robustheit verbessert. Insbesondere für modulierenden Betrieb ist die erfindungsgemäße Anordnung mit dem integrierten Luftwärmetauscher vorteilhaft. Dies trifft für Brenner mit einem zylindrischen Brennelement genauso zu wie für Flächenbrenner mit einer horizontalen Brenneroberfläche und dem erfindungsgemäßem Aufbau. Die Flamme brennt an bzw. in der Brenneroberfläche, so dass dabei oberhalb davon Energie aus der Flamme ausgekoppelt und zur Erwärmung der Verbrennungsluft genutzt wird. Damit entfällt eine elektrische Luftvorwärmung während des stationären Brenner-Betriebszustandes. Dies wirkt sich positiv auf die Energiebilanz des Brenners aus.

Ein bedeutender Vorteil der erfindungsgemäß integrierten Luftvorwärmungsfunktion ist, dass mit zunehmender Brenneroberfläche, beispielsweise bei einem Brennelement für größere Leistungsbereiche, auch die Wärmetauscheroberfläche in gleichem Maße erweiterbar ist, indem einfach längere Doppelrohrelemente zum Einsatz kommen. Damit bleibt die angestrebte Lufttemperatur konstant. Jedes Rohr wird durch seine spezifische Leistungsdichte und die Rohr-Anzahl in Abhängigkeit von der Gesamtleistung definiert. Außer als an den Doppelrohrelementen des Luftwärmetauschers sind dadurch an der Peripherie bzw. sonstigen Brennerkomponenten keine konstruktiven Änderungen für die Darstellung unterschiedlicher Brenner-Leistungsgrößen nötig. Der sonstige Brenneraufbau bleibt somit genauso erhalten wie Anforderungen an den umgebenden Feuerraum. Eine Vergrößerung des Durchtrittsquerschnittes in der als Ringscheibe ausgebildeten Drallerzeugungseinrichtung ist sehr einfach durch Erhöhen der wellenförmigen Prägung realisierbar. Dann muss lediglich die stromaufwärts, also zum Verbrennungsluftkanal gerichtete Begrenzungswand etwas versetzt werden, um die Spaltbreite für eine etwas dickere Ringscheibe auszugleichen.

Mit dem erfindungsgemäßen Luftwärmetauscher soll Verbrennungsluft in allen Brenner-Betriebspunkten mit einer Mindesttemperatur von ca. 350 °C bereitgestellt werden. Dabei ist zu beachten, dass die maximal zulässige Oberflächentemperatur am Luftwärmetauscher eingehalten wird. Es wird zudem eine intensive Verdrallung des gesamten vorgewärmten Luftstromes in unmittelbarer Nähe der Öleinspritzvorrichtung erreicht. Ein Variieren der Drallerzeugungseinrichtung, insbesondere der Ringscheibe, ist einfach möglich. Daher kann beispielsweise von Leistungsgröße zu Leistungsgröße eine Anpassung des Dralleffektes erfolgen. Dies ist bedeutend bei unterschiedlichen und speziell angepassten Öleinspritzvorrichtungen, zum Beispiel mit verändertem Spraybild, variierender Sprayintensität oder vorgegebener Rotation des Spraybildes. Somit wird eine intensive und vollständige Durchmischung von Ölnebel und Verbrennungsluft für verschiedene Leistungsgrößen und unterschiedliche Betriebszustände sichergestellt.

Mit der Erfindung wird ergeben sich auch Vorteile in Bezug auf sehr geringen Druckverlust und Skalierbarkeit im Zuführungsweg der Verbrennungsluft.

Die Zeichnung stellt ein Ausführungsbeispiel der Erfindung dar. Es zeigt:

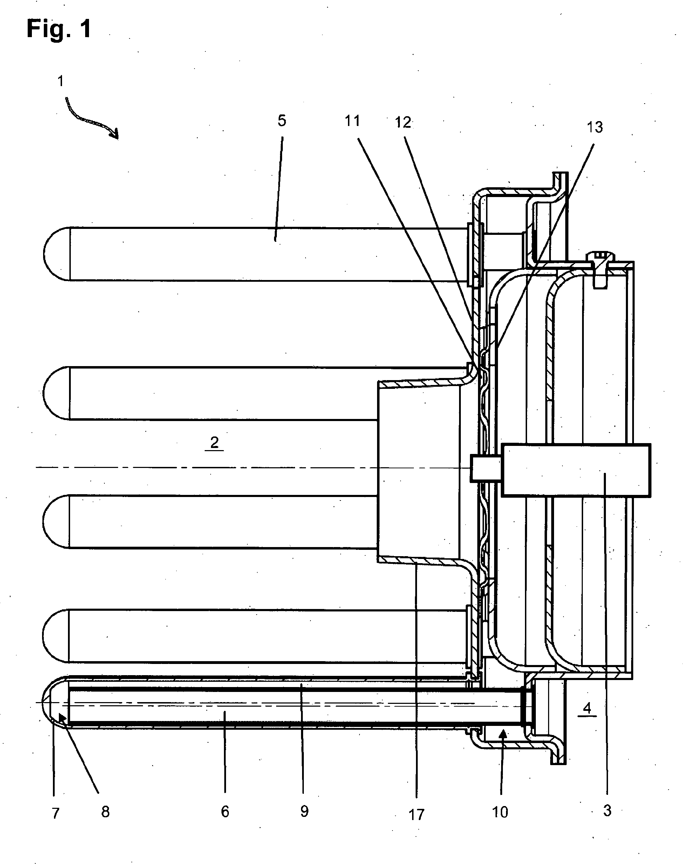

- Fig. 1:: einen Ölvormischbrenner im Längsschnitt und

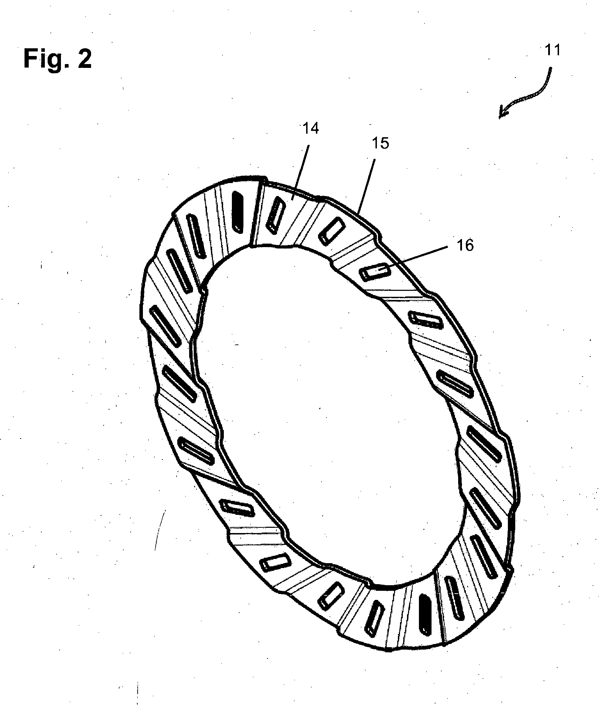

- Fig. 2:: eine Drallerzeugungseinrichtung in einer perspektivischen Ansicht.

Der Ölvormischbrenner besteht im Wesentlichen aus einem Brennelement 1 mit einer nicht dargestellten Brenneroberfläche auf der äußeren Mantelfläche, einer Verteilkammer 2 unterhalb der Brenneroberfläche, einer zentralen Öleinspritzvorrichtung 3, einem an ein stromaufwärts angeordnetes Gebläse angeschlossenen Verbrennungsluftkanal 4 sowie einem Luftwärmetauscher für die Vorwärmung der Verbrennungsluft im Bereich der Brenneroberfläche. Dieser besteht aus mehreren über den Umfang verteilten, sich achsparallel zum Brennelement 1 erstreckenden und parallel durchströmten Doppelrohrelementen 5 mit einem in Reihe durchströmten Innenrohr 6 und einem Außenrohr 7. Dabei ist jedes Doppelrohrelement 5 mit der Eintrittsseite des Innenrohres 6 mit dem Verbrennungsluftkanal 4 verbunden. Die Verbrennungsluft gelangt jeweils in einer Umlenkzone 8 an der Stirnseite des freien Endes in den zwischen Innenrohr 6 und Außenrohr 7 gebildeten Ringraum 9 und strömt in Richtung öleinspritzvorrichtungsnaher Stirnseite zurück.

Dort mündet jeweils der zwischen Innenrohr 6 und Außenrohr 7 gebildete Ringraum 9 aller Doppelrohrelemente 5 in einer ringförmigen Sammelkammer 10 aus. Danach strömt die vorgewärmte Verbrennungsluft, ausgehend von dieser Sammelkammer 10, nach innen über eine Drallerzeugungseinrichtung 11 in den Bereich um die Öleinspritzvorrichtung 3 in die Verteilkammer 2.

Dazu ist die Drallerzeugungseinrichtung 11 ringförmig und symmetrisch zum Zentrum der Öleinspritzvorrichtung 3 ausgebildet. Vorzugsweise als Ringscheibe, welche von zugeordneten Begrenzungswänden 12, 13 in axialer Richtung beidseitig eingeschlossen ist und in radialer Richtung Kanäle für die Verbrennungsluft aufweist. In Umfangsrichtung ergibt sich eine gleichmäßige wellenförmige Gestalt aus alternierenden Kanälen, wobei die Wellenaußenseiten 14, 15 jeweils an zugeordneten Begrenzungswänden 12, 13 anliegen und zwischen den Welleninnenseiten und der jeweils gegenüberliegenden Begrenzungswand 14, 15 jeweils ein flacher Kanal für die Verbrennungsluft ausgebildet wird. Die Wellenaußenseiten 14, 15 sind jeweils mit mindestens einem Langloch 16 versehen, welches in Richtung eines Kanals verläuft und unter anderem zum Anschweißen an eine Begrenzungswand 12, 13 sowie zum Spannungsausgleich beim Biegevorgang dient.

Beabstandet um die zentrale Öleinspritzvorrichtung 3 herum ist ein zugeordneter Konus 17 angeordnet, welcher den Übergang der brennstabnahen Begrenzungswand 12 der Drallerzeugungseinrichtung 11 in die Verteilkammer 2 bildet. Der Konus 17 erstreckt sich mindestens über etwa ein Fünftel der Länge der Verteilkammer 2 in diese hinein und verjüngt sich auf diesem Weg.

## Patentansprüche

1. Ölvormischbrenner mit einem Brennelement (1), einer Brenneroberfläche auf einer äußeren Mantelfläche, einer Verteilkammer (2) unterhalb der Brenneroberfläche, einer zentralen Öleinspritzvorrichtung (3), einem an ein stromaufwärts angeordnetes Gebläse anschließbaren Verbrennungsluftkanal (4) sowie einem Luftwärmetauscher für die Vorwärmung der Verbrennungsluft im Bereich der Brenneroberfläche, welcher aus mehreren über den Umfang verteilten, sich achsparallel zum Brennelement (1) erstreckenden und parallel durchströmten Doppelrohrelementen (5) mit einem in Reihe durchströmten Innenrohr (6) und einem Außenrohr (7) besteht, wobei jedes Doppelrohrelement (5) mit der Eintrittsseite des Innenrohres (6) mit dem Verbrennungsluftkanal (4) verbunden ist, und wobei die Verbrennungsluft jeweils in einer Umlenkzone (8) an der Stirnseite des freien Endes in den zwischen Innenrohr (6) und Außenrohr (7) gebildeten Ringraum (9) gelangt, in Richtung öleinspritzvorrichtungsnaher Stirnseite zurück strömt und dort als vorgewärmte Verbrennungsluft in die Verteilkammer (2) eintritt, wobei jeweils der zwischen Innenrohr (6) und Außenrohr (7) gebildete Ringraum (9) aller Doppelrohrelemente (5) in einer ringförmigen Sammelkammer (10) ausmündet, **dadurch gekennzeichnet, dass** die vorgewärmte Verbrennungsluft ausgehend von dieser Sammelkammer (10) nach innen über eine Drallerzeugungseinrichtung (11) in den Bereich um die Öleinspritzvorrichtung (3) in die Verteilkammer (2) strömt, wobei die Drallerzeugungseinrichtung (11) als Ringscheibe ausgebildet ist, welche von zugeordneten Begrenzungswänden (12, 13) in axialer Richtung beidseitig eingeschlossen ist und in radialer Richtung Kanäle für die Verbrennungsluft aufweist, wobei die Drallerzeugungseinrichtung (11) als Ringscheibe ausgebildet ist, in Umfangsrichtung eine gleichmäßige wellenförmige Gestalt aus alternierenden Kanälen aufweist, wobei die Wellenaußenseiten (14, 15) jeweils an zugeordneten Begrenzungswänden (12, 13) anliegen und zwischen den Welleninnenseiten und der jeweils gegenüberliegenden Begrenzungswand (12, 13) jeweils ein Kanal für die Verbrennungsluft ausgebildet wird.

2. Ölvormischbrenner nach Anspruch 1, **dadurch gekennzeichnet, dass** die von außen nach innen durchströmte Drallerzeugungseinrichtung (11) ringförmig und symmetrisch zum Zentrum der Öleinspritzvorrichtung (3) ausgebildet ist.

3. Ölvormischbrenner nach einem der Ansprüche 1 oder 2, **dadurch gekennzeichnet, dass** die Kanäle für die Verbrennungsluft die Form von Flachkanälen mit jeweils einem im Wesentlichen rechteckigen Durchströmquerschnitt besitzen.

4. Ölvormischbrenner nach einem der Ansprüche 1 bis 3, **dadurch gekennzeichnet, dass** die Kanäle der Drallerzeugungseinrichtung (11) einen radialen Anstellwinkel aufweisen, wobei dieser etwa im Bereich von 30 Grad bis 75 Grad zur Mittelsenkrechte beträgt.

5. Ölvormischbrenner nach einem der Ansprüche 1 bis 4,
**dadurch gekennzeichnet, dass** die Drallrichtung des mit der Drallerzeugungseinrichtung (11) beschleunigten Luftstromes gleich der Drallrichtung des mit der zentralen Öleinspritzvorrichtung (3) entsprechend beschleunigten Ölsprays ist.

6. Ölvormischbrenner nach einem der Ansprüche 1 bis 5,
**dadurch gekennzeichnet, dass** beabstandet um die zentrale Öleinspritzvorrichtung (3) herum ein zugeordneter Konus (17) angeordnet ist, welcher den Übergang der brennstabnahen Begrenzungswand (12) der Drallerzeugungseinrichtung (11) in die Verteilkammer (2) bildet.

7. Ölvormischbrenner nach Anspruch 6,
**dadurch gekennzeichnet, dass** sich der Konus (17) mindestens über etwa ein Fünftel der Länge der Verteilkammer (2) erstreckt und sich in Strömungsrichtung so verjüngt, dass der Eintrittsdurchmesser mindestens 5 Prozent größer als der Austrittsdurchmesser ist.

## Claims

1. Oil premix burner with a burner element (1), a burner surface on an outer lateral surface, a distribution chamber (2) below the burner surface, a central oil injection device (3), a combustion air duct (4) which can be connected to a fan arranged upstream, and an air heat exchanger for pre-heating the combustion air in the region of the burner surface, which heat exchanger consists of multiple double-tube elements (5) which are distributed about the circumference, extend parallel with the axis of the burner element (1), are flowed through in parallel, and have an inner tube (6) and an outer tube (7) which are flowed through in series, wherein the inlet side of the inner tube (6) of each double-tube element (5) is connected to the combustion air duct (4), and wherein in each case the combustion air enters, in a redirection zone (8) at the end face of the free end, the annular space (9) formed between the inner tube (6) and the outer tube (7), flows back in the direction of the end face close to the oil injection device, where it enters the distribution chamber (2) as pre-heated combustion air, wherein in each case the annular space (9), formed between the inner tube (6) and the outer tube (7), of all double-tube elements (5) opens into an annular collection chamber (10), **characterized in that**, proceeding from this collection chamber (10), the preheated combustion air flows inwards via a swirler (11) into the region around the oil injection device (3) into the distribution chamber (2), wherein the swirler (11) is designed as an annular disc which is enclosed on both sides in the axial direction by associated boundary walls (12, 13) and which has, in the radial direction, ducts for the combustion air, wherein the swirler (11) is formed as an annular disc, has in the circumferential direction an even undulating aspect consisting of alternating ducts, wherein the wave outer sides (14, 15) bear in each case against associated boundary walls (12, 13) and between the wave inner sides and the respective opposite boundary wall (12, 13) there is formed in each case a duct for the combustion air.

2. Oil premix burner according to Claim 1, **characterized in that** the swirler (11) which is flowed through from outside to inside is formed in annular fashion and symmetrically with respect to the centre of the oil injection device (3).

3. Oil premix burner according to either of Claims 1 and 2, **characterized in that** the ducts for the combustion air are in the shape of flat ducts with in each case an essentially rectangular throughflow cross section.

4. Oil premix burner according to one of Claims 1 to 3, **characterized in that** the ducts of the swirler (11) have a radial angle of attack which is approximately in the range from 30 degrees to 75 degrees with respect to the mid-perpendicular.

5. Oil premix burner according to one of Claims 1 to 4, **characterized in that** the swirl direction of the air stream accelerated with the swirler (11) is the same as the swirl direction of the oil spray accordingly accelerated with the central oil injection device (3).

6. Oil premix burner according to one of Claims 1 to 5, **characterized in that** a cone (17) is associated with the central oil injection device (3) and is arranged at a distance from and around the latter, and forms the transition from that boundary wall (12) of the swirler (11) close to the burner lance into the distribution chamber (2).

7. Oil premix burner according to Claim 6, **characterized in that** the cone (17) extends over at least approximately one fifth of the length of the distribution chamber (2) and tapers in the flow direction such that the inlet diameter is at least 5 percent larger than the outlet diameter.

## Revendications

1. Brûleur à prémélange d'huile comprenant un élément de brûleur (1), une surface de brûleur sur une surface d'enveloppe extérieure, une chambre de distribution (2) sous la surface du brûleur, un dispositif d'injection d'huile central (3), un canal d'air de combustion (4) pouvant être raccordé à une soufflante disposée en amont ainsi qu'un échangeur de chaleur à air pour le préchauffage de l'air de combustion dans la région de la surface du brûleur, lequel se compose de plusieurs éléments tubulaires doubles (5) répartis sur la périphérie, s'étendant avec leurs axes parallèles à l'élément de brûleur (1) et parcourus en parallèle par l'écoulement, avec un tube interne (6) parcouru par l'écoulement en série et un tube externe (7), chaque élément tubulaire double (5) étant connecté par le côté d'entrée du tube interne (6) au canal d'air de combustion (4), l'air de combustion parvenant à chaque fois dans une zone de déviation (8) au niveau du côté frontal de l'extrémité libre dans l'espace annulaire (9) formé entre le tube interne (6) et le tube externe (7), revenant dans la direction du côté frontal proche du dispositif d'injection d'huile et de là entrant en tant qu'air de combustion préchauffé dans la chambre de distribution (2), l'espace annulaire (9) formé entre le tube interne (6) et le tube externe (7) de tous les éléments tubulaires doubles (5) débouchant à chaque fois dans une chambre de collecte de forme annulaire (10), **caractérisé en ce que** l'air de combustion préchauffé s'écoule à partir de cette chambre de collecte (10) vers l'intérieur par le biais d'un dispositif de génération de tourbillons (11) dans la région autour du dispositif d'injection d'huile (3) dans la chambre de distribution (2), le dispositif de génération de tourbillons (11) étant réalisé sous forme de disque annulaire qui est entouré des deux côtés dans la direction axiale par des parois de limitation associées (12, 13) et qui présente, dans la direction radiale, des canaux pour l'air de combustion, le dispositif de génération de tourbillons (11) étant réalisé sous forme de disque annulaire, présentant dans la direction périphérique une forme ondulée uniforme constituée d'une alternance de canaux, les côtés extérieurs ondulés (14, 15) s'appliquant à chaque fois contre des parois de limitation associées (12, 13) et entre les côtés intérieurs ondulés et la paroi de limitation opposée respective (12, 13) étant à chaque fois réalisé un canal pour l'air de combustion.

2. Brûleur à prémélange d'huile selon la revendication 1, **caractérisé en ce que** le dispositif de génération de tourbillons (11) parcouru par l'écoulement de l'extérieur vers l'intérieur est réalisé sous forme annulaire et symétriquement par rapport au centre du dispositif d'injection d'huile (3).

3. Brûleur à prémélange d'huile selon l'une quelconque des revendications 1 ou 2, **caractérisé en ce que** les canaux pour l'air de combustion présentent la forme de canaux plats ayant à chaque fois une section transversale d'écoulement essentiellement rectangulaire.

4. Brûleur à prémélange d'huile selon l'une quelconque des revendications 1 à 3, **caractérisé en ce que** les canaux du dispositif de génération de tourbillons (11) présentent un angle d'attaque radial, celui-ci valant approximativement 30 degrés à 75 degrés par rapport à la médiatrice.

5. Brûleur à prémélange d'huile selon l'une quelconque des revendications 1 à 4,
**caractérisé en ce que** la direction du tourbillon du courant d'air accéléré avec le dispositif de génération de tourbillons (11) est identique à la direction du tourbillon du jet d'huile accéléré de manière correspondante avec le dispositif d'injection d'huile central (3).

6. Brûleur à prémélange d'huile selon l'une quelconque des revendications 1 à 5,
**caractérisé en ce qu'**à distance autour du dispositif d'injection d'huile central (3) est disposé un cône associé (17) qui constitue la transition de la paroi de limitation proche du crayon combustible (12) du dispositif de génération de tourbillons (11) dans la chambre de distribution (2).

7. Brûleur à prémélange d'huile selon la revendication 6,
**caractérisé en ce que** le cône (17) s'étend au moins sur environ un cinquième de la longueur de la chambre de distribution (2) et se rétrécit dans la direction d'écoulement de telle sorte que le diamètre d'entrée soit au moins 5 pour cent supérieur au diamètre de sortie.
